# EUROPEAN PATENT APPLICATION

(11) **EP 2 835 571 A1**
(43) Date of publication of application: **11.02.2015**
(21) Application number: 14177639.3
(22) Date of filing: 18.07.2014
(51) Int. Cl.: F16M 11/10, F16M 13/00, G06F 1/16, H04M 1/04, H04N 5/64

(54) **Display device and stand base used therein**

(30) Priority: 19.07.2013 TW 102125964
(71) Applicant: BenQ Corporation, Taipei 114 (TW)
(72) Inventor: Chen, Jing-Ren, Taichung City 411 (TW); Wang, Chien-Jui, Taipei City 106 (TW); Chiang, Chin Fu, New Taipei City 238 (TW)
(74) Representative: Liedtke, Markus

(57) **Abstract**

A display device includes a stand base (10) and a display panel (30) disposed thereon. The stand base includes a top plate (300) and a first flip plate (100). The top plate has a trough (310) formed thereon, wherein the trough is surrounded by an inner edge formed by the top plate. The first flip plate is at least partially disposed in the trough and has a first pivot rotatably connected to the inner edge to allow the first flip plate to lift from the trough relative to the top plate. The first flip plate is capable of rotating relative to the first pivot between a cover position and a bearing position. The first flip plate shields at least a portion of the trough when the first flip plate is in the cover position. The first flip plate lifts up relative to the trough and has a first included angle with the top plate when the first flip is in the bearing position.

## Description

### BACKGROUND OF THE INVENTION

### 1. Field of the Invention

The present invention generally relates to a display device and a stand base used therein. Particularly, the present invention relates to a display device and a stand base used therein, which is capable of supporting an electronic device.

### 2. Description of the Prior Art

As the technology continuously progresses, functions of handheld electronic devices become much more versatile and the operation ability is also more powerful. Since the handheld electronic devices have high portability, users increasingly rely on such devices. Therefore, lots of work or leisure related applications, such as reading, listening to music, browsing internet, receiving/sending emails, are executed on the handheld electronic devices.

However, the handheld electronic devices still have limitations in volume, power consumption, and hardware that cannot satisfy the need of users for long term usage. Therefore, when the user moves to some places, the handheld electronic device communicates with specific electronic devices at the place to communicate information between the handheld electronic device and the specific electronic device, and some functions of the handheld electronic device are executed on the specific electronic device. For example, the image in the handheld electronic device can be displayed by the home television or the music in the handheld electronic device can be played by the home audio system.

When performing such actions, the user usually focus on the specific electronic device but still needs to operate the handheld electronic device. Therefore, the placement of the handheld electronic device becomes an important factor to be considered.

### SUMMARY OF THE INVENTION

It is an object of the present invention to provide a display device and a stand base used therein, which can accommodate and support a handheld electronic device or other small sized electronic devices.

It is another object of the present invention to provide a display device and a stand base used therein, which can maintain the readability and operability of information of the handheld device accommodated thereon.

It is a further object of the present invention to provide a display device and a stand base used therein, wherein the stand base is received in a cover position to maintain the integrity of outer appearance when the stand base is not used for accommodating the handheld electronic device or other electronic devices.

The display device includes a display panel and a stand base. The display panel is disposed on the stand base and a portion of the stand base protrudes on a display side of the display panel. The stand base includes a top plate and a first flip plate. The top plate has a trough formed thereon, wherein the trough is surrounded by an inner edge formed by the top plate. The first flip plate is at least partially disposed in the trough and has a first pivot rotatably connected to the inner edge to allow the first flip plate to lift from the trough relative to the top plate.

The first flip plate is capable of rotating relative to the first pivot between a cover position and a bearing position. When the first flip plate is in the cover position, the first flip plate shields at least a portion of the trough to provide an integral outer appearance. When the first flip plate is in the bearing position, the first flip plate lifts up relative to the trough and has a first included angle with the top plate. As such, the trough is not shielded by the first flip plate and configured to accommodate or receive a handheld electronic device or other small-sized electronic devices, such as mobile phone, personal media player, and the first flip plate provides support to the handheld electronic device.

### BRIEF DESCRIPTION OF THE DRAWINGS

FIG. 1 is a schematic view of the display device;
FIG. 2 is an exploded view of elements of the stand base;
FIG. 3A is a schematic view of the first flip plate in the cover position;
FIG. 3B is a schematic view of the first flip plate in the bearing position;
FIG. 4 is a schematic view of the stand base supporting the handheld electronic device;
FIG. 5A is a schematic view of the rear edge supporting the first flip plate;
FIG. 5B is a schematic view of the protrusion supporting the first flip plate;
FIG. 5C is a schematic view of the first pivot disposed on the middle section of the first flip plate;
FIG. 6A and FIG. 6B are schematic views of the first flip plate with a bending portion;
FIG. 7 is a schematic view of the stand base having a second flip plate;
FIG. 8A is a schematic view of the first flip plate and the second flip plate in the cover position;
FIG. 8B is a schematic view of the first flip plate and the second flip plate in the bearing position;
FIG. 8C is a schematic view of the first flip plate and the second flip plate having different included angles with the top plate;
FIG. 8D is a schematic view of the stand base of FIG. 7 supporting an electronic device;
FIG. 8E is a schematic view of the stand base of FIG. 7 supporting a larger sized electronic device;
FIG. 9A and FIG. 9B are schematic views of the first flip plate having a bump disposed on the inner surface;
FIG. 10 is a schematic view of the first flip plate and the second flip plate having a linking bar connected therebetween;
FIG. 11A and FIG. 11B are schematic views of the stand base having a sliding block;
FIG. 12A to FIG. 12C are schematic views of another embodiment of the stand base; and
FIG. 13A to FIG. 13C are schematic views of another embodiment of the stand base.

### DETAILED DESCRIPTION OF THE PREFERRED EMBODIMENT

The present invention provides a display device and a stand base used therein. In a preferred embodiment, the display device may include a television, a monitor for desktop or laptop computer, a vehicle display device, or the like.

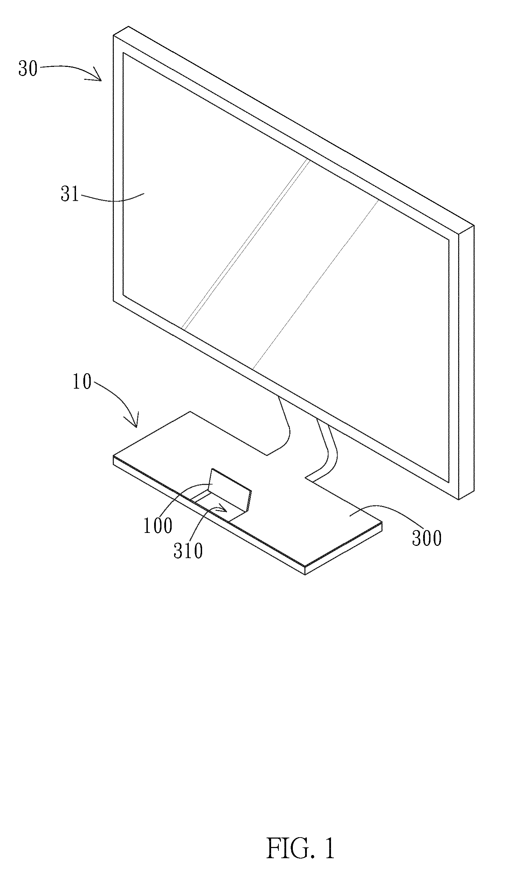

As shown in FIG. 1, the display device includes a display panel 30 and a stand base 10. The display panel 30 is disposed on the stand base 10 and is preferably a liquid crystal display, an organic light-emitting diode display, an electrophoretic display, or other types of display. The display panel 30 has a display surface 31 for displaying images. One end of the stand base 10 preferably protrudes outside the plane on which the display surface 31 lies and extends toward a direction outside the image-displaying side.

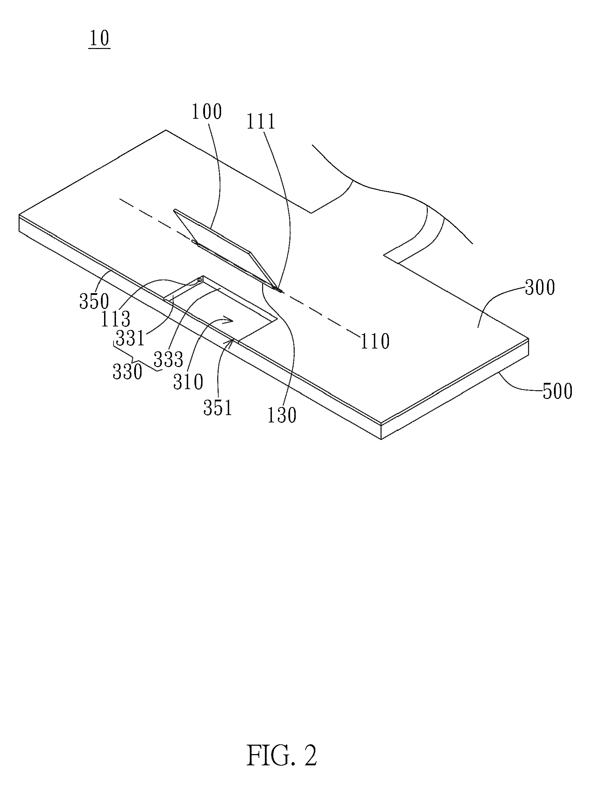

As shown in FIG. 2, the stand base 10 includes a top plate 300 and a first flip plate 100. The top plate 300 is preferably a portion of a housing of the stand base 10 that faces a bottom of the display panel 30. The front end of the top plate 300 preferably protrudes outside the plane on which the display surface 31 lies and extends toward a direction outside the image-displaying side. The stand base 10 further includes a bottom plate 500 disposed under the top plate 300 to serve as an interface physically contacting a disposition plane, such as a table surface. The top plate 300 has a trough 310 formed thereon. The trough 310 is surrounded by an inner edge 330 formed by the top plate 300. In a preferred embodiment, the top plate 300 and the bottom plate 500 may have a spacing therebetween, wherein the trough 310 communicates with the spacing, so that the effective depth of the trough 310 is larger than the thickness of the top plate 300. In the embodiment of FIG. 2, the trough 310 is a quadrilateral and is formed at a location close to the front edge 350 of the top plate 300. That is, the top plate 300 has an opening 351 at the front edge 350. As shown in FIG. 2, the inner edge 330 includes two opposite side edges 331 and a rear edge 333 that traverses between the two side edges 331. The side edges 331 are respectively disposed on two sides of the opening 351 and the rear edge 333 is disposed opposite to the opening 351. However, in a different embodiment, the trough 310 can be disposed at a location not near the front edge 350 of the top plate 300. In such a case, the front edge 350 is closed without the opening 351.

As shown in FIG. 2, the first flip plate 100 is at least partially disposed in the trough 310 and has a first pivot 110 rotatably connected to the inner edge 330 to allow the first flip plate 100 to lift from the trough 310 relative to the top plate 300. The first pivot 110 is preferably disposed as two shafts 111 on two opposite sides of the first flip plate 100 and two shaft holes 113 are correspondingly disposed on the inner edge 330, so that the shafts 111 can engage with the shaft holes 113 to form the first pivot 110. However, in a different embodiment, the disposition locations of the shaft 111 and the shaft hole 113 can be interchanged to form the first pivot 110. The first pivot 110 is preferably disposed on two sides at a bottom end 130 of the first flip plate 100, so that the bottom end 130 substantially serves as a rotation axis as the first flip plate 100 rotates. In addition, the first pivot 110 is preferably parallel to the display surface 31, so that the first flip plate 100 and the display surface 31 will have a same front view orientation after the first flip plate 100 lifts from the trough 310.

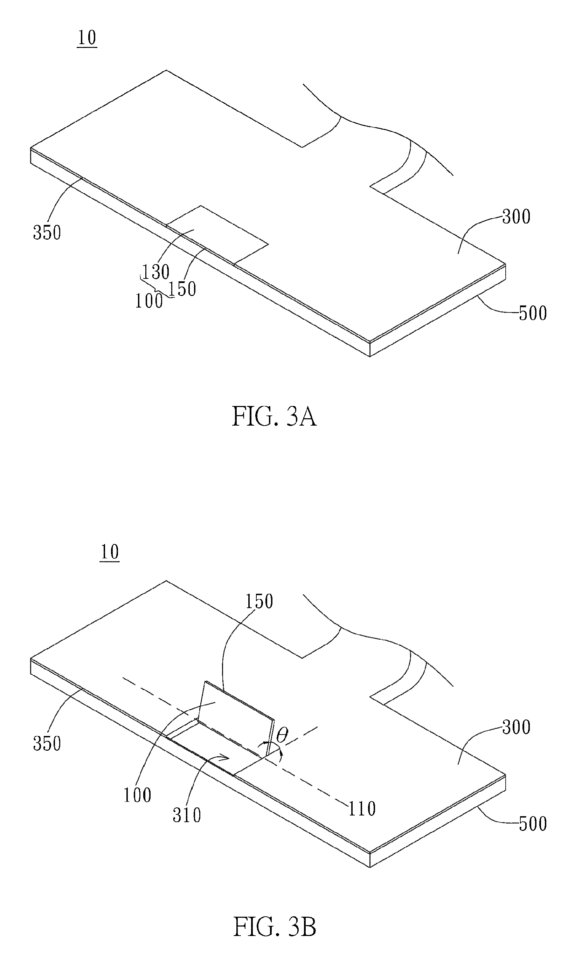

The first flip plate 100 can rotate relative to the first pivot 110 between a cover position and a bearing position. As shown in FIG. 3A, when the first flip plate 100 is in the cover position, the first flip plate 100 shields at least a portion of the trough 310. In such a configuration, the first flip plate 100 is preferably parallel to the top plate 300 and the outer surface 130 of the first flip plate 100 is preferably coplanar with the surface of the top plate 300 to provide an integral outer appearance. In addition, a free end 150 of the first flip plate 100 that is away from the first pivot 110 is preferably flushed with the front edge 350 of the top plate 300. The first flip plate 100 preferably has a thickness smaller than the top plate 300 to facilitate the coplanar effect. However, in a different design, the first flip plate 100 can have a thicker design to provide a better stability of support. In addition, the outer surface 130 of the first flip plate 100 can protrude over the top plate 300 to enhance the operability. As shown in FIG. 3B, when the first flip plate 100 is in the bearing position, the first flip plate 100 lifts up relative to the trough 310 and has a first included angle *θ* with the top plate 300. In such a configuration, the trough 310 is preferably exposed by the first flip plate 100 for accommodating or receiving a handheld electronic device, such as a mobile phone, a personal media player, etc. while the first flip plate 100 can provide support to the handheld electronic device. In this embodiment, the first included angle *θ* is preferably smaller than 90 degrees to support the electronic device in an inclined manner. In other words, when the first flip plate 100 rotates from the cover position to the bearing position, the first flip plate 100 rotates over 90 degrees. In addition, in a different embodiment, the first included angle *θ* may be larger than 90 degrees for different uses.

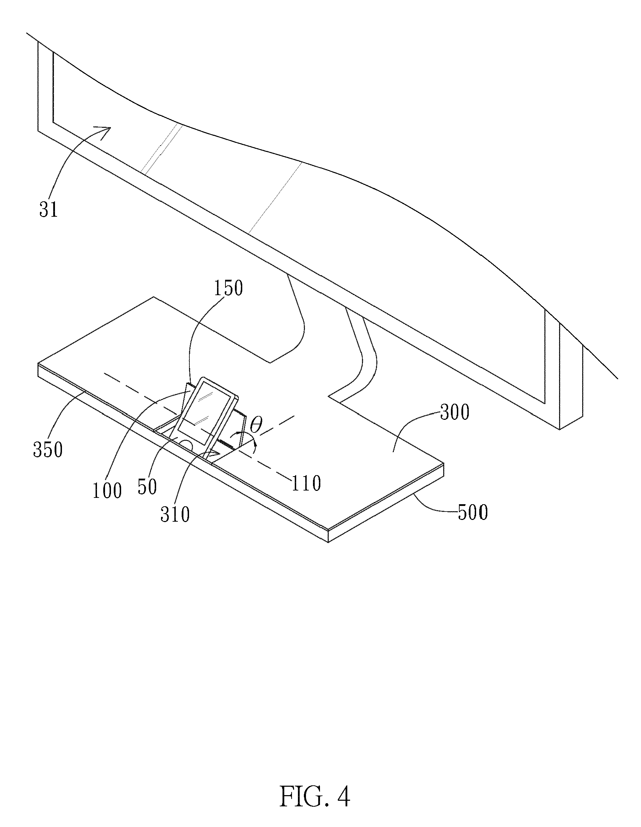

As shown in FIG. 4, when the first flip plate 100 is in the bearing position, the handheld electronic device 50 can be disposed in the trough 310, and the first flip plate 100 can support the handheld electronic device 50 from the backside. The user can see the display of the handheld electronic device 50 when facing the display surface 31 and can operate the operation interface on the handheld electronic device 50, such as the touch panel or key button. In addition, in order to facilitate the placement or pickup of the handheld electronic device 50, the first flip plate 100 is preferably disposed outside the display side of the display surface 31.

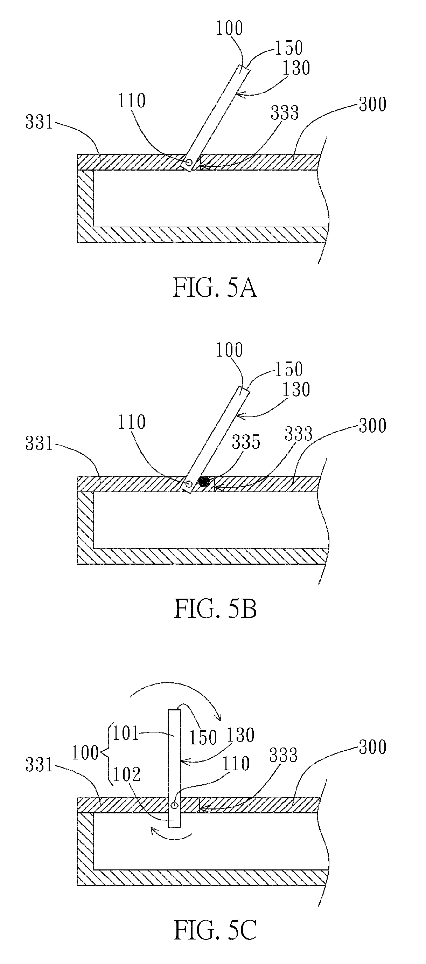

As shown in FIG. 5A, in this embodiment, when the first flip plate 100 rotates to the bearing position, the outer surface 130 of the first flip plate 100 leans on the rear edge 333 and the rear edge 333 provides a support force to support the first flip plate 100. By such a design, the external force exerted on the first flip plate 100 is uniformly distributed to the rear edge 333 and the top plate 300. However, in the embodiment of FIG. 5B, a protrusion 335 can be disposed on the side edge 331 and near the rear edge 333. When the first flip plate 100 is in the bearing position, the first flip plate 100 leans on the protrusion 335 and has a gap with the rear edge 333 to enhance the convenience of assembly. Moreover, since the location of the protrusion 335 can be easily modified in design, the convenience of modification in angle can be enhanced.

Furthermore, in the embodiment of FIG. 5C, the first pivot 110 is disposed on the middle section near the bottom end 130 of the first flip plate 100, instead of the bottom end 130. The first flip plate 100 is divided into a first portion 101 and a second portion 102 by the first pivot 110 serving as the boundary. The first portion 101 is preferably longer than the second portion 102. When the first flip plate 100 is in the bearing position, the first portion 101 lifts up and extends out of the trough 310 to serve as a main portion for bearing the backside of the handheld electronic device. When the first flip plate 100 is in the cover position, the second portion 102 is a portion of the first flip plate 100 that is between the first pivot 110 and the rear edge 333. When the first flip plate 100 rotates to the bearing position, the second portion 102 correspondingly rotates into the trough 310. By such a design, the second portion 102 extends the support structure formed by the first portion into the trough 310 and can provide the handheld electronic device that extends into the trough 310 with a better and much stable clamping effect.

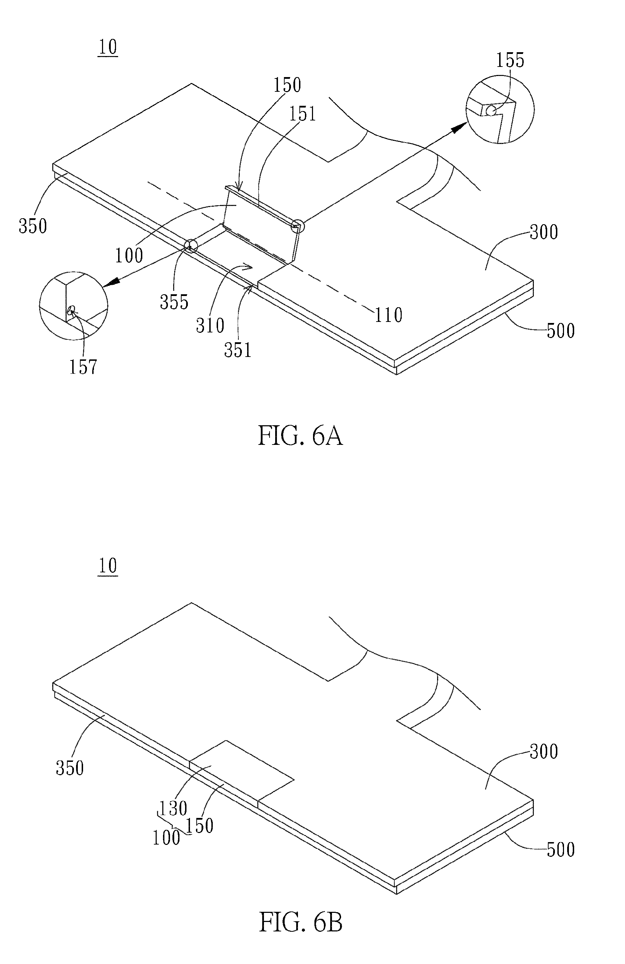

In the embodiments of FIG. 6A and FIG. 6B, the free end 150 of the first flip plate 100 preferably has a bending portion 151 that is bent relative to the outer surface 130 of the first flip plate 100, wherein the bending direction is preferably the same as the rotation direction of the first flip plate 100 rotating from the bearing position to the cover position. When the first flip plate 100 is in the cover position, the bending portion 151 is flushed with the front edge 150 of the top plate 300. When the first flip plate is in the bearing position, the bending portion 151 protrudes from the inner surface of the first flip plate 100 to serve as a contact portion that substantially contacts the handheld electronic device. In this embodiment, the front end 350 of the top plate 300 preferably also has a bending portion 355. When the first flip plate 100 is in the cover position, the bending portion 351 is continuously connected to the bending portion 355 on two sides of the opening 351. In addition, as shown in FIG. 6A, the bending portion 351 preferably has a first engaging part 155, such as a bump, disposed on a surface that faces the side edge 331. The side edge 331 preferably has a second engaging part 157, such as a recess, disposed corresponding to the first engaging part 155. When the first flip plate 100 is in the cover position, the first engaging part 155 is engaged with the second engaging part 157 to temporarily maintain the first flip plate 100 in position.

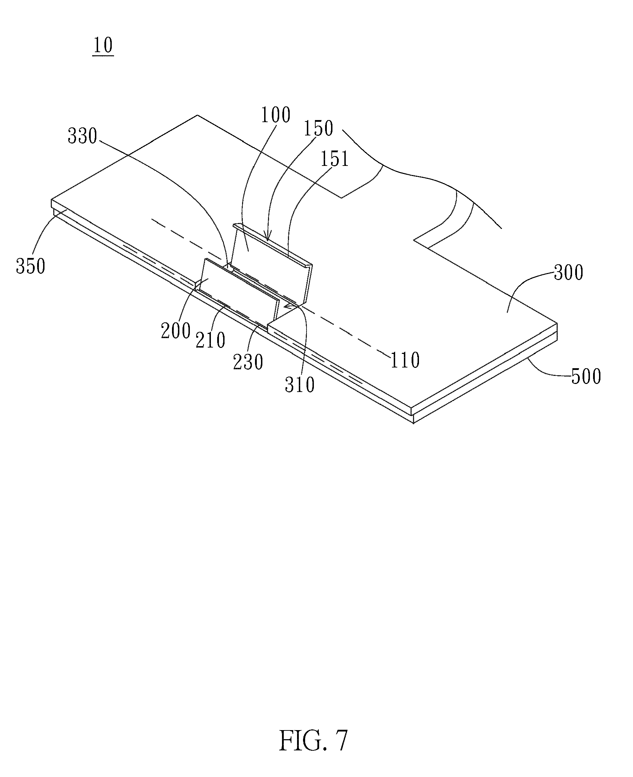

FIG. 7 shows another embodiment of the stand base. As shown in FIG. 7, the stand base further includes a second flip plate 200 which is at least partially disposed in the trough 310 and has a second pivot 210 rotatably connected to the inner edge 330 to allow the second flip plate 200 to lift from the trough 310 relative to the top plate 300. The second pivot 210 is connected to the other side of the inner edge 330 with respect to the first pivot 110 and is preferably parallel to the first pivot 110. It is noted that the second pivot 210 is disposed lower than the first pivot 110 in the direction vertical to the top plate 300. The second pivot 210 is preferably disposed in a manner similar to the first pivot 110 and preferably disposed on two sides of the bottom end 230 of the second flip plate 200, so that the bottom end 230 substantially serves as a rotation axis when the second flip plate 200 rotates.

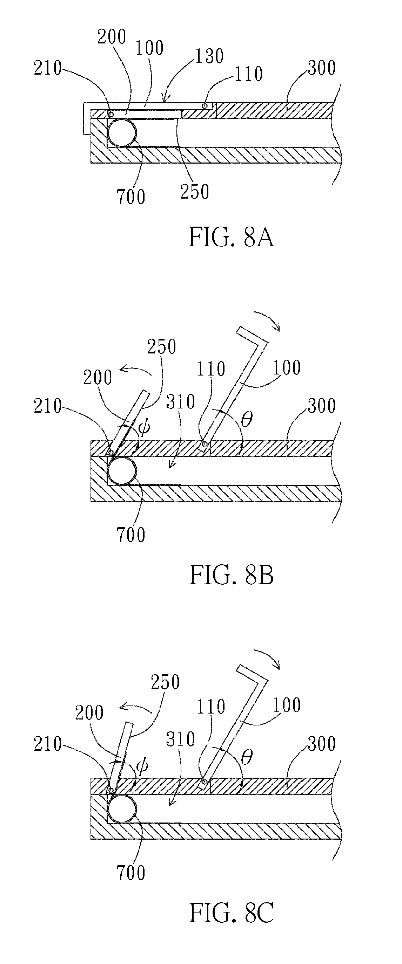

As shown in FIG. 8A, when the first flip plate 100 is in the cover position, the second flip plate 200 is located under the first flip plate 100 and overlaps the first flip plate 10. In other words, only the outer surface 130 of the first flip plate 100 can be seen from the outer side. In this embodiment, the overlapping portions of the first flip plate 100 and the second flip plate 200 are located between the first pivot 110 and the second pivot 210. As shown in FIG. 8B, when the first flip plate 100 is in the bearing position, the second flip plate 200 lifts up relative to the trough 310 and has a second included angle Φ with the top plate 300. Since the overlapping portions of the first flip plate 100 and the second flip plate 200 are located between the first pivot 110 and the second pivot 210, the rotation direction of the second flip plate 200 is reverse to the rotation direction of the first pivot 110 and the rotation angle of the second flip plate 200 is preferably smaller than the rotation angle of the first flip plate 100. Moreover, in this embodiment, an elastic member 700 is disposed in the trough 310. When the first flip plate 100 rotates from the cover position to the bearing position, the elastic member 700 drives the second flip plate 200 to lift up simultaneously.

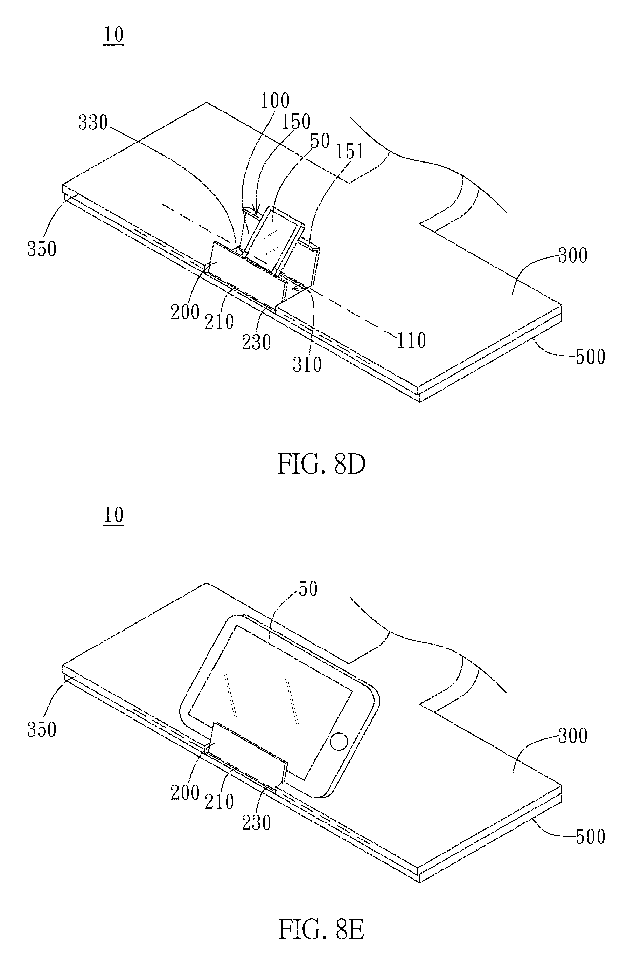

As shown in FIG. 8B, when the first flip plate 100 is in the bearing position, the first flip plate 100 is parallel to the second flip plate 200. In other words, the first included angle *θ* is equal to the second included angle Φ. As shown in the drawing, the first included angle *θ* and the second included angle Φ preferably represent the included angles between the first flip plate 100 and the top plate 300 and between the second flip plate 200 and the top plate 300 on the side behind the front edge 350, respectively. In a different embodiment, as shown in FIG. 8C, the second included angle Φ can be an acute angle that is larger than the first included angle *θ*, so that the distance between the first flip plate 100 and the second flip plate 200 increases along the direction away from the top plate 300 to facilitate the placement of the handheld electronic device in the trough 310. As shown in FIG. 8D, when the stand base bears the handheld electronic device 50, the first flip plate 100 supports the handheld electronic device 50 from the backside and the second flip plate 200 stops the bottom of the handheld electronic device 50 from the front side to prevent the handheld electronic device 50 from sliding or moving out of the trough 310. Furthermore, as shown in FIG. 8E, when the horizontal width of the handheld electronic device 50 is larger than the trough 310 or the handheld electronic device 50 has a larger size, the handheld electronic device 50 can be disposed on the top plate 300 and clamped between the first flip plate 100 and the second flip plate 200. In other words, the handheld electronic device 50 is supported by the first flip plate 100 from the backside and the display side (front side) of the handheld electronic device 50 is limited by the second flip plate 200. Furthermore, two ends on the longitudinal direction of the handheld electronic device 50 are located on two sides of the trough 310 in the longitudinal direction and supported by the top plate 300. From the above descriptions, it is noted that the stand base of this embodiment can accommodate or receive the handheld electronic device 50 of different size and can support the handheld electronic device 50 placed in different orientations to promote the usage flexibility.

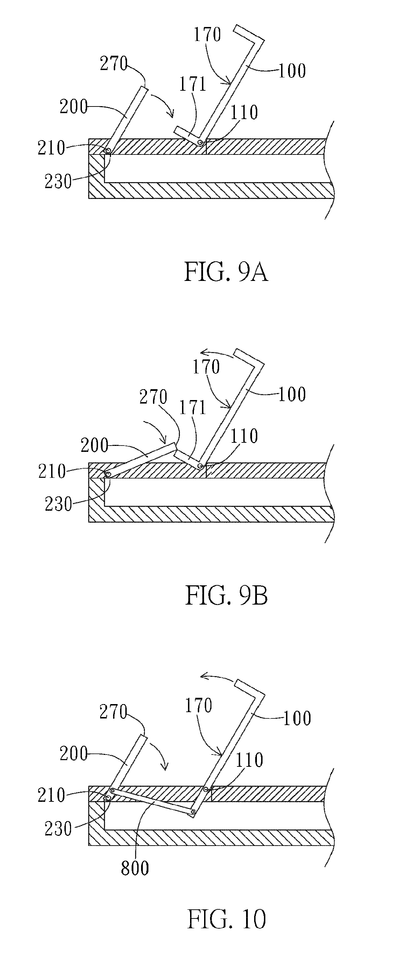

In the embodiment of FIG. 9A, the first flip plate 100 has an inner surface 170 that faces the second flip plate 200, and a bump 171 is disposed on the inner surface 170. When the first flip plate 100 is in the bearing position, the straight distance between the bump 171 and the second pivot 210 is smaller than the length of the second flip plate 200 that extends out and is measured from the second pivot 210. As shown in FIG. 9B, when the second flip plate 200 rotates toward the trough 310, the free end 270 of the second flip plate 200 that is opposite to the bottom end 230 touches the bump 171 and drives the first flip plate 100 to rotate toward the cover position simultaneously. Furthermore, in the embodiment of FIG. 10, the stand base further includes a linking bar 800 connecting the first flip plate 100 and the second flip plate 200. When the first flip plate 100 rotates between the cover position and the bearing position, the first flip plate 100 drives the second flip plate 200 to rotate simultaneously via the linking bar 800. Similarly, when the second flip plate 200 rotates, the second flip plate 200 will drive the first flip plate 100 to rotate simultaneously via the linking bar 800.

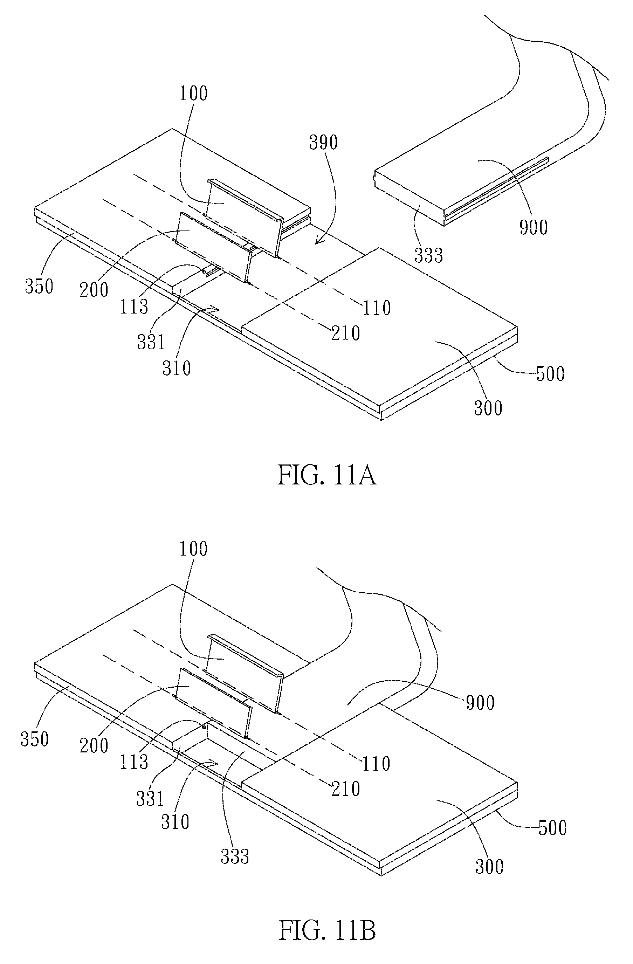

In the embodiments of FIG. 11A and FIG. 11B, the stand base 10 further includes a sliding block 900. The top plate 300 has a sliding groove 390. The sliding block 900 can slide along the extending direction of the sliding groove 390 into the sliding groove 390 to form the trough 310 together with two side edges of the sliding groove 390. In other words, the rear edge 333 of the inner edge 330 is the front edge of the sliding block 900. The sliding block 900 is preferably connected to the display panel 30 to serve as the connection structure between the stand base 10 and the display panel 30.

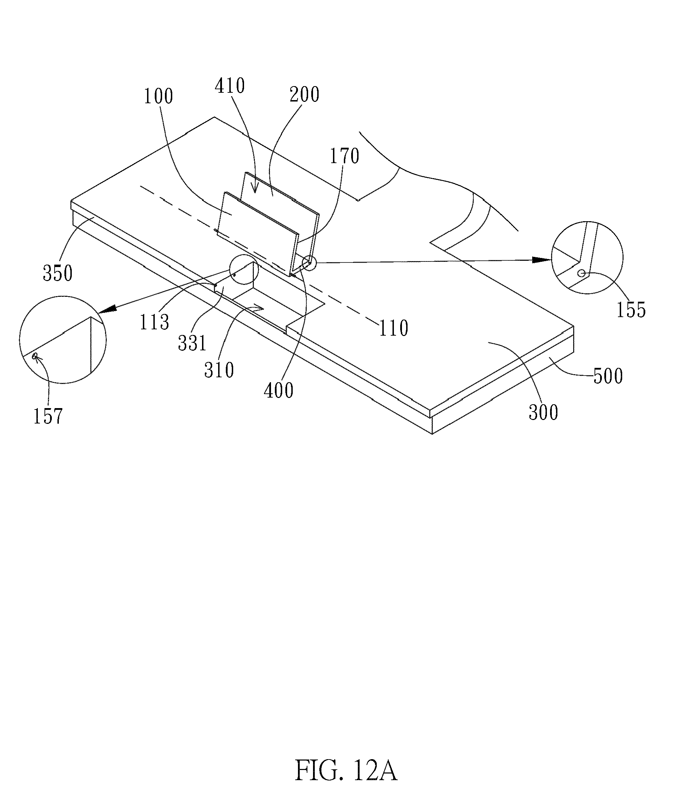

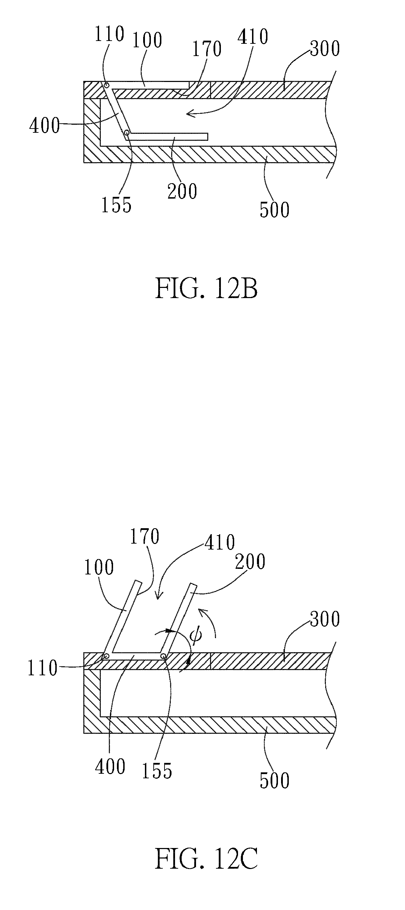

FIG. 12A to FIG. 12C illustrate another embodiment of the stand base. As shown in FIG. 12A, the stand base further includes a support plate 400 and a second flip plate 200. The support plate 400 is connected to the inner edge 170 of the first flip plate 100 and extends away from the inner edge 170. In this embodiment, the support plate 400 extends from the end of the first flip plate 100 on which the first pivot 110 is disposed. However, in a different embodiment, the support plate 400 can be connected to the middle section of the first flip plate 100. As shown in FIG. 12A to FIG. 12C, the second flip plate 200 is connected to one end of the support plate 400 away from the first flip plate 100 and located on the side of the inner surface 170 of the first flip plate 100. In other words, the first flip plate 100 and the second flip plate 200 are respectively connected to two ends of the support plate 400, and the ends of the first flip plate 100 and the second flip plate 200 not connected to the support plate 400 together form a receiving opening 410. The second flip plate 200 is preferably parallel to the first flip plate 100. The first flip plate 100 and the second flip plate 200 preferably extend from the support plate 400 toward a same direction. However, in a different embodiment, the second flip plate 200 can slightly tilt relative to the first flip plate 100. That is, the second flip plate 200 is not parallel to the first flip plate 100 and the second flip plate 200 has a larger included angle with the support plate 400. As such, the width of the receiving opening 410 in the cross-section of FIG. 12C is larger than the width of the support plate 400 in the same direction to facilitate the placement of the handheld electronic device.

As shown in FIG. 12B, when the first flip plate 100 is in the cover position, the first flip plate shields at least a portion of the trough 310 and the second flip plate 200 is located under the first flip plate 100 and overlaps the first flip plate 100. Since the support plate 400 is connected between the first flip plate 100 and the second flip plate 200, a fixed distance is maintained between the first flip plate 100 and the second flip plate 200. In order to improve the smooth degree when the first flip plate 100 is in the cover position, the vertical distance between the first flip plate 100 and the second flip plat 200 is preferably smaller than the effective depth of trough 310, i.e. the distance between the top plate 300 and the bottom plate 500, so that the first flip plate 300 can be coplanar with the top plate 300.

As shown in FIG. 12C, when the first flip plate 100 moves from the cover position to the bearing position, the first flip plate 100 drives the support plate 400 to enable the second flip plate 200 to lift up from the trough 310, and the second included angle Φ is included between the second flip plate 200 and the top plate 300. In such a configuration, the spacing between the first slip plate 100 and the second flip plate 200 can be configured to accommodate the handheld electronic device (not shown) and the support plate 400 supports the handheld electronic device at the bottom. In order to enable the handheld electronic device supported at a nature upward angle of elevation, the rotation angle that the first flip plate 100 rotates from the cover position to the bearing position is preferably smaller than 90 degrees and the support plate 400 tilts relative to the first flip plate 100, so that the support plate 400 can be parallel to the top plate 300 when the first flip plate 100 is in the bearing position. In addition, in order to maintain the first flip plate 100 and the second flip plate 200 in the bearing position, first engaging parts 155 are preferably disposed on two side edges of the second flip plate 200 and second engaging parts 157 are disposed on the side edges 331 of the inner edge 330 corresponding to the first engaging parts 155, as shown in FIG. 12A. When the first flip plate 100 and the second flip plate 200 are in the bearing position, the first engaging part 155 is engaged with the second engaging part 157 to position the first flip plate 100 and the second flip plate 200.

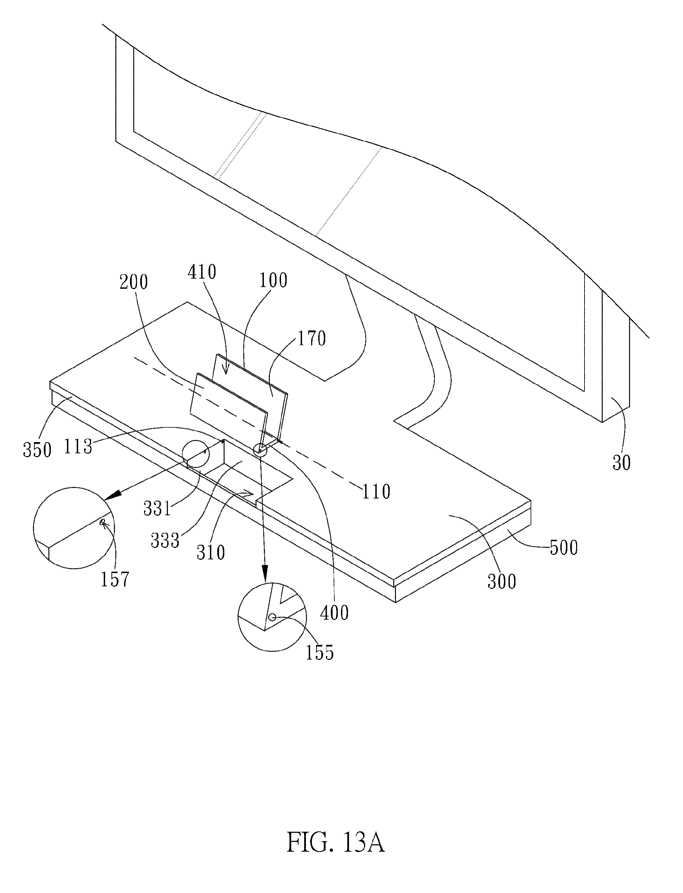

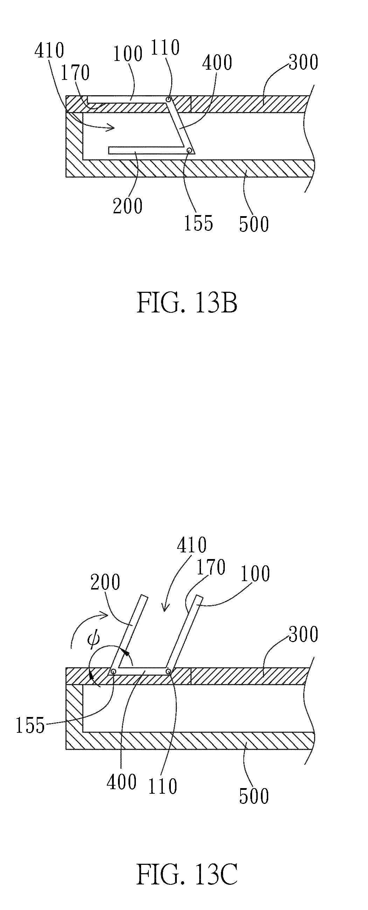

Furthermore, in the embodiments of FIG. 13A to FIG. 13C, the disposition arrangement of the first flip plate 100, the support plate 400, and the second flip plate 200 with respect to the top plate 300 can be modified to change the rotation direction of the first flip plate 100. As shown in FIG. 13A to FIG. 13C, the first flip plate 100 is preferably connected to the side edges 331 and close to the rear edge 333, and the receiving opening 410 faces the front edge 350 of the top plate 300 to allow the first flip plate 100 to lift up relative to the top plate 30 in a direction toward the display panel 30 to achieve a similar effect as shown in FIG. 12A to FIG. 12C.

Although the preferred embodiments of the present invention have been described herein, the above description is merely illustrative. The preferred embodiments disclosed will not limit the scope of the present invention. Further modification of the invention herein disclosed will occur to those skilled in the respective arts and all such modifications are deemed to be within the scope of the invention as defined by the appended claims.

## Claims

1. A stand base, comprising:
a top plate having a trough formed thereon, wherein the trough is surrounded by an inner edge formed by the top plate; and
a first flip plate at least partially disposed in the trough, the first flip plate having a first pivot rotatably connected to the inner edge,
wherein the first flip plate is capable of rotating relative to the first pivot between a cover position and a bearing position; the first flip plate shields at least a portion of the trough when the first flip plate is in the cover position; the first flip plate lifts up relative to the trough and has a first included angle with the top plate when the first flip is in the bearing position.

2. The stand base of claim 1, wherein the first flip plate rotates from the cover position to the bearing position by an angle over 90 degrees.

3. The stand base of claim 2, wherein the inner edge includes two opposite side edges and a rear edge traversing between the two side edges; two ends of the first pivot are respectively connected to the two side edges; the first flip plate leans on the rear edge when the first flip plate is in the bearing position.

4. The stand base of claim 2, wherein the inner edge includes two opposite side edges and a rear edge traversing between the two side edges; two ends of the first pivot are respectively connected to the two side edges; at least one of the two side edges has a protrusion disposed close to the rear edge; the first flip plate leans on the protrusion and a gap exists between the first flip plate and the rear edge when the first flip plate is in the bearing position.

5. The stand base of claim 2, wherein the inner edge includes two opposite side edges and a rear edge traversing between the two side edges; two ends of the first pivot are respectively connected to the two side edges; the first flip plate is divided into a first portion and a second portion by the first pivot; the second portion faces the rear edge when the first flip plate is in the cove position; the second portion rotates into the trough and the first portion lifts up and extends out of the trough when the first flip plate is in the bearing position.

6. The stand base of claim 1, wherein the top plate has an edge and the trough is formed close to the edge; the edge has an opening; the inner edge includes two opposite side edges located on two sides of the opening; two ends of the first pivot are pivotally connected to the two side edge and away from the opening; a free end of the first flip plate away from the first pivot is flushed with the edge when the first flip plate is in the cover position.

7. The stand base of claim 6, wherein the first flip plate has an outer surface and the free end has a bending portion bent relative to the outer surface; the outer surface is parallel to the top plate and the bending portion is flushed with a surface of the edge when the first flip plate is in the cover position.

8. The stand base of claim 7, wherein a face of the bending portion facing the side edge has a first engaging part disposed thereon and the side edge has a second engaging part disposed corresponding to the first engaging part; the first engaging part engages with the second engaging part when the first flip plate is in the cover position.

9. The stand base of claim 1, further comprising a second flip plate at least partially disposed in the trough, wherein the second flip plate has a second pivot rotatably connected to the inner edge opposite to the first pivot; wherein the second pivot is disposed under the first flip plate and overlaps the first flip plate when the first flip plate is in the cover position; the second flip plate lifts up relative to the trough and has a second included angle with the top plate when the first flip plate is in the bearing position.

10. The stand base of claim 9, wherein the second flip plate and the first flip plate overlap between the first pivot and the second pivot when the first flip plate is in the cover position.

11. The stand base of claim 9, wherein the second flip plate lifts up along a direction reverse to a rotation direction of the first flip plate.

12. The stand base of claim 11, wherein the first flip plate is substantially parallel to the second flip plate when the first flip plate is in the bearing position.

13. The stand base of claim 11, wherein the first flip plate has an inner surface facing the second flip plate and a bump disposed on the inner surface; a free end of the second flip plate away from the second pivot is rotatable relative to the second pivot to touch the bump.

14. The stand base of claim 9, further comprising a linking bar connecting the first flip plate and the second flip plate; the first flip plate drives the second flip plate to rotate to a position under the first flip plate via the linking bar when the first flip plate rotates from the bearing position to the cover position.

15. The stand base of claim 9, further comprising an elastic member disposed in the trough and connected to the second flip plate, wherein the elastic member drives the second flip plate to lift up when the first flip plate rotates from the cover position to the bearing position.

16. The stand base of claim 1, further comprising a sliding block, wherein the top plate has a sliding groove; the sliding block is accommodated in the sliding groove and forms the trough together with two side edges of the sliding groove.

17. The stand base of claim 1, further comprising a support plate and a second flip plate, wherein the support plate is connected to an inner surface of the first flip plate and extends away from the inner surface; the second flip plate is connected to an end of the support plate away from the first flip plate and located to face the inner surface of the first flip plate; wherein the second flip plate overlaps under the first flip plate when the first flip plate is in the cover position; the first flip plate drives the second flip plate to lift up and extend out of the trough and the second flip plate has a second included angle with the top pate when the first flip plate rotates from the cover position to the bearing position.

18. The stand base of claim 17, wherein the first flip plate rotates from the cover position to the bearing position by an angle less than 90 degrees.

19. The stand base of claim 17, wherein a vertical distance between the first flip plate and the second flip plate is less than a depth of the trough.

20. A display device, comprising:
the stand base of any one of claims 1 to 19; and
a display panel disposed on the stand base and having a display surface,
wherein the first flip plate is located on a display side of the display surface.

21. The display device of claim 20, wherein the first pivot is parallel to the display surface.
